Europäisches Patentamt

European Patent Office

Office européen des brevets

(11) Publication number: **0 083 219**
**B1**

# (12) EUROPEAN PATENT SPECIFICATION

(45) Date of publication of patent specification: **21.01.87**

(51) Int. Cl.⁴: **H 04 N 3/08,** H 04 N 5/33

(21) Application number: **82306908.3**

(22) Date of filing: **23.12.82**

(54) **Image stabilizing in TV systems.**

(30) Priority: **29.12.81 US 335414**

(43) Date of publication of application:
**06.07.83 Bulletin 83/27**

(45) Publication of the grant of the patent:
**21.01.87 Bulletin 87/04**

(84) Designated Contracting States:
**DE GB NL**

(56) References cited:
**DE-B-1 208 175**
**DE-B-1 293 200**
**DE-B-2 224 275**
**US-A-3 456 074**
**US-A-3 518 372**
**US-A-3 619 500**
**US-A-4 245 254**

(73) Proprietor: **HONEYWELL INC.**
**Honeywell Plaza**
**Minneapolis Minnesota 55408 (US)**

(72) Inventor: **Netzer, Yishay**
**5 Kenmar Drive Apt. No.18**
**Billerica Massachusetts 01821 (US)**

(74) Representative: **Harman, Michael Godfrey et al**
**Honeywell Control Systems Ltd. Patent**
**Department Charles Square**
**Bracknell Berkshire RG12 1EB (GB)**

Courier Press, Leamington Spa, England.

## Description

The present invention relates generally to TV systems and more particularly to image stabilization in TV systems with unstable optics.

Conventional TV systems normally use some form of TV camera, which has electronic scanning. However, in some circumstances, it is preferred to use a mechanical scanning system; this is often the case in infra-red systems, for example, because infra-red mirrors are cheaper than infra-red lenses and/or because a single infra-red detector (past which the image has to be mechanically scanned) is cheaper or better than a TV camera.

Such a mechanical scanning system is well known, for example from US 3 723 642. To achieve line scanning, a prismatic mirror spinning at high constant speed is used; each face in turn of the prism intercepts the light from the scene being scanned and reflects it as an angularly rotating beam. To achieve frame scanning, which occurs at much lower speed, a rocking mirror is used, in the path of the beam reflected from the prismatic mirror, reflecting the beam to rotate also about an axis perpendicular to the first rotation. The detector is placed in the path of the doubly-reflected beam. The rocking mirror may be driven mechanically, e.g. by a rotating cam, or electrically, by electric drive means which impose directly a near-sawtooth motion.

Stabilization of an imaging device such as is used in infra-red detection systems is required in order to accurately detect the scene of interest. Such stabilization has in the past been implemented in several ways. One such method is to gimbal the entire imaging device. In doing so, the gimbal system is used for steering while stabilization of the line of sight is achieved through the augmented inertia of the imaging system. A second method is implemented by keeping the imaging device hard mounted, i.e. secured in a predetermined position with respect to the vehicle in which it resides, and stabilizing the line of sight by means of one or two mirrors. In this method, stabilization is achieved by a compensatory motion of the mirror and is opposed, rather than aided, by inertial forces.

In the particular case of a stabilization system mounted in a vehicle such as a tank, steering of the line of sight is unnecessary because the sight is fixed to the turret, and the head mirror is slaved to the gun which is coarsely, but not optically stabilized. As a result, the residual jitter in the line of sight is relatively small, though sufficient to render the image almost useless when the tank is moving. The controlling of the head mirror in this manner requires an expensive servo system having complex mechanical components.

It is accordingly a primary object of the present invention to provide an improved image stabilization system.

Accordingly the present invention provides an image scanning and display system comprising mechanical-optical means for scanning across a field of view and including a detector, scan sync pulse generating means, and electronic display means fed from the detector and with the scan sync pulses, and stabilizing means for stabilizing the system against instability of the mechanical-optical means, characterized in that the stabilizing means comprise movement detecting means for detecting movement of the optical means in the scan direction (horizontal), and circuitry for adjusting the timing of the scan sync pulses accordingly.

It should be noted that US 3 619 500 shows an electronic image stabilization system in which both mechanical and electronic techniques are used to stabilize the image. However, the image to be stabilized is not one obtained by a TV system, but an image intensifier image, so that there is no scanning of the scene being viewed. The mechanical stabilization is achieved by providing rate gyros to sense the movement of the image intensifier (relative to a desired movement) and feeding back feedback signals to counteract jitter or wobble of the image intensifier. This deals with low frequency movements. To counteract high frequency movements, the high frequency outputs of the rate gyros are used to control the deflection yoke of the image intensifier tube, so electrically shifting the image in opposition to such high frequency movements.

An embodiment of the invention will now be described, by way of example, with reference to the drawings, in which:

Figure 1 shows the general system, and

Figure 2 is a more detailed diagram showing the stabilization system.

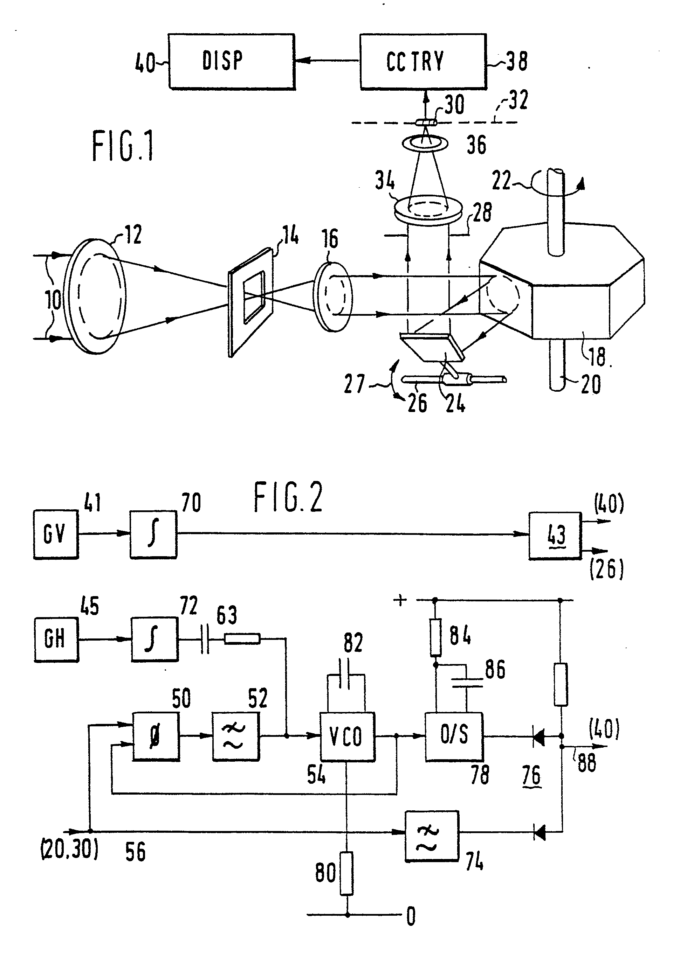

Referring to Figure 1, this shows an optical scanning system and associated components. Radiation 10 from the scene of interest is received by objective lens 12, and in turn passes through collimator lens 16 via field stop 14. The optical path continues along a line of sight and is reflected by a high speed spin mirror 18 which rotates about shaft 20 (representative of a second axis) in the direction shown by arrow 22. The path then continues by reflection from a field scanning mirror 24 which oscillates about shaft 26 (representative of a first axis) by a small angle as represented by double arrow 27. After passing through aperture stop 28, the radiation passes through a detector lens 34 and a cold shield 36 and is received by detector(s) 30 which lie on an image plane 32.

The signal from the detector 30 is treated as a video signal. Means (not shown) coupled to the shaft 20 generates a line sync pulse each time a fresh facet of the mirror 18 comes into the path of the radiation and begins to sweep the radiation across the mirror 24. The mirror 26 is driven by a signal generator 43 which produces an approximately sawtooth waveform to drive the mirror 26, and also produces a frame sync pulse each time the sweep of the sawtooth begins. The video, line sync, and frame sync signals are processed in the electronics 38 and are used in the display 40, which is a TV type display.

As noted above, instability of the optics shown in Figure 1 results in a corresponding instability of the picture displayed by the display means 40, and it is therefore necessary to compensate for this instability. It should first be noted that instability of the optics is monitored by a pair of gyros, which are mounted rigidly with the optics. Thus signals are available indicating any movement of the optics in either the vertical or the horizontal directions. We will assume that the gyros are rate gyros, so that their output signals need integrating to produce signals indicative of the actual displacements of the optics, though of course if rate integrating or position gyros are used, their signals can be used directly.

Before discussing the horizontal or line stabilization, the frame or vertical stabilization will be briefly discussed. For the vertical axis, the correction command is superimposed on the sawtooth input waveform which is applied to the scanning mirror 24 and forces its oscillation. Without this correction, the scanning lines would not be evenly spaced relative to the image, i.e. target, plane unless the vehicle were stationary, Under angular vibration, the scan speed would no longer be constant with respect to inertial space. Accordingly, the scan lines may overlay or even intermingle, thereby disrupting the linear time-to-position relationship. This is particularly sensitive in a high interlace ratio system such as a forward looking infrared system (FLIR). With the correction signal applied, these vertical scan lines are evenly spaced in the image plane regardless of the vibrations encountered. In the vertical channel, the output of the corresponding rate gyro GV (41) (Figure 2) is integrated at 70 to obtain the vertical angular position. The integrator 70 feeds a vertical compensation system incorporated in the vertical scan mirror 26 drive circuit 43 to achieve the desired results.

In the line or horizontal axis, the stabilization is effected differently. The present system relies on off-setting the image plane relative to the permitted field-of-view i.e. the field stop. To appreciate how this is done, it is noted that it is possible to change the horizontal image position on a video display relative to the display raster scan by modifying the delay time between the display's horizontal sync pulses and the reference pulses derived from the mirror 18 when spinning. This modification does not interfere with the scanner or sync generation circuits of the display. This modification is equivalent to panning a camera because the position of each pixel (i.e. picture element) is shifted relative to the sync pulse which starts the corresponding line. By dynamically modulating such delay, horizontal correction can be achieved much above the expected jitter bandwidth.

Horizontal image position control is thus based on modifying the time position or phase of the horizontal sync pulses relative to the video information and the horizontal sync pulse (i.e., the "raw" horizontal sync pulse) provided therewith. To enable image motion in both directions, left or right, the delay may be either negative or positive. A variable delay for this purpose is implemented by means of a phase-locked-loop, which includes a voltage controlled oscillator (VCO) 54, a phase detector 50, and a loop filter 52. The input to the phase-locked-loop is the "raw" horizontal sync signal received on line 56 at one input of phase detector 52. The VCO 54 locks on the "raw" sync signal in both frequency and phase. The phase lock is achieved by virtue of a conventional edge-triggered phase detector, which may be implemented in the same IC as the VCO 50.

In the absence of a control signal received via coupling circuit 63, the leading edge of the output signal of VCO 54 on line 66, which is fed back to the other input of detector 50, coincides with the leading edge of the "raw" sync pulses on line 56. Applying a control signal which is additive to the output of phase detector 50 generates a phase shift at the VCO output. This control signal is applied via the loop filter 52, which is a low pass RC circuit. For the loop to remain frequency locked, thee VCO 54 input voltage must remain the same, and this is achieved by an equal and opposite voltage change from detector 50. Such a voltage change signifies a change in the VCO output phase relative to the input of the phase-locked-loop as described.

In the horizontal channel, the signal from a horizontal rate gyro 45 is integrated by integrator 72, which feeds the VCO 54 via coupling circuit 63. Resistor 80 is used to set the voltage control time delay, and capacitor 82 is set so that the frequency of VCO 54 generated pulses is as close as possible to the horizontal sync pulse frequency.

The VCO 54 feeds a one-shot 78, the timing of which is provided by resistor 84 and capacitor 86. The output of one-shot 78 provides a properly timed and formed new sync pulse which is coupled to one input of an OR gate 76, which comprises two diodes and a resistor as shown. The output of gate 76 is the new composite sync signal. The composite sync includes the video information as well as the horizontal sync pulses. Thus, the new composite sync signal on line 88 includes the video information as received on line 56, as well as the new horizontal sync pulse as received from one-shot 78.

The video information is removed from the raw composite sync signal on line 56 via low pass filter 74, which may be an RC circuit. Filter 74 feeds the other input of gate 76 such that the original video information and the new sync pulse combine to provide the new composite sync signal.

It can be seen that other techniques can be used to achieve the same results. For example, the phase shifting of the raw sync pulses may be implemented in a purely digital manner by counting high frequency clock pulses from a master clock in accordance with the desired phase shift. Although negative delays cannot be obtained from such a digital technique, this would pose no problem since normally, with no correction, a number of master clock pulses can be counted to give a delay of exactly one horizontal line, which is indistinguishable on the display as far as an operator is concerned. This one line delay is similar to the natural delay of the phase-locked-loop. By changing the duration of this delay image, motion in the horizontal axis can be effected.

## Claims

1. An image scanning and display system comprising mechanical-optical means (12—36) for scanning across a field of view and including a detector (30), scan sync pulse generating means (line 56, from 20), and electronic display means (38, 40) fed from the detector (30) and with the scan sync pulse (line 88), and stabilizing means for stabilizing the system against instability of the mechanical-optical means, characterized in that the stabilizing means (Figure 2) comprise movement detecting means (GH, 45) for detecting movement of the optical means in the scan direction (horizontal), and circuitry (50—54, 78) for adjusting the timing of the scan sync pulses accordingly.

2. A system according to Claim 1, characterized in that said circuitry comprises a phase-locked loop comprising a phase detector (50) fed with the incoming sync pulses and a voltage controlled oscillator (54) fed from the phase detector and from the movement detecting means and feeding the phase detector.

3. A system according to either previous Claim, characterized in that the mechanical-optical system also includes transverse scan means (24, 26) for scanning transversely to the scan across the field of view, and the stabilizing means includes movement detecting means (GV, 41) for detecting movement of the optical means in the transverse direction and which produce a correction signal which is used to adjust the drive signal of the transverse scan means.

4. A system according to any previous Claim, characterized in that or each movement detecting means comprises a gyro.

5. A system according to any previous use when mounted on a gun in a tank.

## Patentansprüche

1. Bildabtast- und -Wiedergabesystem mit mechanisch-optischen Mitteln (12—36) zur Abtastung eines Gesichtsfeldes, wobei ein Detektor (30), ein Abtastsynchronisierimpulsgenerator (Leitung 56 von 20) sowie vom Detektor (30) und mit den Abtastsynchronisierimpulsen (Leitung 88) gespeiste elektronische Anzeigemittel (38, 40) und eine Einrichtung zum Stabilisieren des Systems gegen Instabilitäten der mechanisch-optischen Mittel vorgesehen sind, dadurch gekennzeichnet, daß die Stabilisierungseinrichtung (Fig. 2) einen Bewegungsdetektor (GH, 45) zum Feststellen von Bewegungen der optischen Mittel in Abtastrichtung (horizontal) sowie eine Schaltung (50—54, 78) zur dementsprechenden Einstellung der Zeitfolge der Abtastsynchronisierimpulse aufweist.

2. System nach Anspruch 1, dadurch gekennzeichnet, daß die Schaltung eine Phasenverriegelungsschleife mit einem mit den ankommenden Synchronisierimpulsen gespeisten Phasendetektor (50) sowie einen vom Phasendetektor und vom Bewegungsdetektor gespeisten spannungsgesteuerten Oszillator (54) aufweist, der zugleich den Phasendetektor speist.

3. System nach einem der vorangehenden Ansprüche, dadurch gekennzeichnet, daß die mechanisch-optischen Mittel ferner Querabtastmittel (24, 26) zur Abtastung quer zur Abtastung des Gesichtsfelds aufweist und die Stabilisierungseinrichtung einen Bewegungsdetektor (GV, 41) zum Feststellen von Bewegungen der optischen Mittel in Querrichtung umfaßt, die ein Korrektursignal erzeugen, welches zum Einstellen des Antriebssignals der Querabtastmittel benutzt wird.

4. System nach einem der vorangehenden Ansprüche, dadurch gekennzeichnet, daß jeder Bewegungsdetektor einen Kreisel enthält.

5. System nach einem der vorangehenden Ansprüche, befestigt am Geschütz eines Panzers.

## Revendications

1. Système d'affichage et de balayage d'image comprenant des moyens optico-mécaniques (12—36) pour le balayage d'un champ et comportant un détecteur (30), un moyen générateur d'impulsions synchronisées de balayage (ligne 56, à partir de 20), et un moyen d'affichage électronique (38, 40) alimenté à partir du détecteur (30) et avec l'impulsion synchronisée de balayage (ligne 88) et des moyens de stabilisation pour stabiliser le système vis-à-vis d'une instabilité des moyens optico-mécaniques, caractérisé en ce que les moyens de stabilisation (figure 2) comprennent un détecteur de mouvement (GH, 45) pour détecter le mouvement du moyen optique dans la direction de balayage (horizontale) et un circuit (50—54, 78) pour régler en conséquence le minutage des impulsions synchronisées de balayage.

2. Système selon la revendication 1, caractérisé en ce que ledit circuit comprend une boucle bloquée en phase comportant un détecteur de phase (50) alimenté avec les impulsions synchronisées d'entrée et un oscillateur à commande de tension (54) alimenté à partir du détecteur de phase et du détecteur de mouvement et alimentant le détecteur de phase.

3. Système selon l'une des revendications 1 ou 2, caractérisé en ce que les moyens optico-mécaniques comprenant aussi un moyen de balayage transversal (24, 26) pour balayer transversalement le champ et le moyen de stabilisation comprend un détecteur de mouvement (GV, 41) pour détecter le mouvement du moyen optique dans la direction transversale et produisant un signal de correction qui est utilisé pour régler le signal de dérive du moyen de balayage transversal.

4. Système selon l'une quelconque des revendications 1 à 3, caractérisé en ce que chaque dispositif de détection de mouvement comprend un gyro.

5. Système selon l'une quelconque des revendications 1 à 4, caractérisé en ce que lors de l'utilisation il est monté sur un canon dans un char.

**FIG.1**

**FIG.2**